# EUROPÄISCHE PATENTSCHRIFT

(11) **EP 1 246 862 B1**
(45) Veröffentlichungstag und Bekanntmachung des Hinweises auf die Patenterteilung: **26.10.2005**
(21) Anmeldenummer: 00981353.6
(22) Anmeldetag: 08.12.2000
(51) Int. Cl.: C08G 65/48, C08G 75/23, C08J 5/22

(54) **VERFAHREN ZUR HERSTELLUNG VON SULFONIERTEN AROMATISCHEN POLYMEREN**
METHOD FOR PRODUCING SULFONATED AROMATIC POLYMERS
PROCEDE DE PRODUCTION DE POLYMERES AROMATIQUES SULFONES

(30) Priorität: 09.12.1999 DE 19959289
(43) Veröffentlichungstag der Anmeldung: 09.10.2002
(73) Patentinhaber: Pemeas GmbH, 65926 Frankfurt am Main (DE)
(72) Erfinder: CUI, Wei, 89134 Blaustein (DE); SOCZKA-GUTH, Thomas, 89601 Schelklingen (DE); FRANK, Georg, 72074 Tübingen (DE)
(74) Vertreter: Luderschmidt, Schüler & Partner GbR
(86) Internationale Anmeldenummer: PCT/EP2000/012427
(87) Internationale Veröffentlichungsnummer: WO 2001/042336

(56) Entgegenhaltungen:
- EP-A- 0 341 473
- EP-A- 0 768 330
- WO-A-97/05191
- DE-A- 19 526 855
- DE-A- 19 813 613
- FR-A- 2 040 950
- US-A- 3 715 323

## Beschreibung

Die vorliegende Erfindung betrifft ein Verfahren zur Herstellung von sulfonierten aromatischen Polymeren, insbesondere von sulfonierten aromatischen Polyetherketonen und - sulfonen.

Aromatische sulfonierte Polymere kommen in vielen Anwendungen zum Einsatz, beispielsweise in Form von Membranen, welche in Brennstoffzellen, Hochleistungskondensatoren und Dialysegeräten verwendet werden.

Brennstoffzellen sind elektrochemische Energieumwandler, die sich besonders durch ihren hohen Wirkungsgrad auszeichnen. Polymerelektrolyt-Brennstoffzellen zeichnen sich unter den verschiedenen Arten von Brennstoffzellen durch ihre hohe Leistungsdichte und ihr geringes Leistungsgewicht aus.

Für die Weiterentwicklung der Brennstoffzellentechnologie, insbesondere für deren Anwendung in größerem Maßstab, ist es notwendig, die Herstellkosten der zum Einsatz kommenden Materialien zu reduzieren, ohne daß dabei eine Einbuße an Leistungsfähigkeit gegenüber den herkömmlich verwendeten Materialien in Kauf genommen werden muß.

Polyethersulfone (nachstehend auch "PES" genannt) sind als handelsübliche Produkte erhältlich und zeichnen sich durch hohe thermische, chemische und mechanische Beständigkeit aus. Ein typisches Beispiel für Polyethersulfone ist in der nachfolgenden Abbildung gegeben.

Die Sulfonierung von PES ist von großem Interesse für die Herstellung von Polymeren, die in Trennungsprozesse mit Membranverfahren eingesetzt werden können.

Aus dem Stand der Technik sind verschiedene Sulfonierungsverfahren von PES bekannt, beispielsweise aus den EP-A-0,008,894; EP-A-0,112,724; US-A-4,508,852; US-A-3,709,841 und DE-A-3,814,760.

Allerdings weisen diese bisher bekannten Sulfonierungsverfahren eine Reihe von Nachteilen auf. So besteht beim Einsatz von starken Sulfonierungmitteln, wie Oleum oder Chlorsulfonsäure bei Temperaturen oberhalb von 25°C die Gefahr des Abbaus von Polymerketten. Zur Vermeidung des Polymerabbaus müßte man folglich die Reaktionstemperatur niedrig halten. Dieses wiederum führt üblicherweise zu einem niedrigen Sulfonierungsgrad sowie zu einer langen Reaktionszeit. Weiterhin hat sich herausgestellt, daß bei den vorbekannten Verfahren die Sulfonierung in organischen Lösungsmitteln heterogen abläuft. Dieses führt in der Regel zu einer inhomogenen Struktur des sulfonierten Produktes.

Weitere Sulfonierungsverfahren für PES werden in der US-A-4,508,852 beschrieben. In einem der Verfahren werden Dichlorsulfonsäure sowohl als Lösungsmittel als auch als Sulfonierungsmittel verwendet. Die Temperatur bei der Reaktion wird von Raumtemperatur für 2h, danach auf 82°C für 30 min eingestellt. In dem zweiten Verfahren werden 1,1,2,2-Tetrachlorethan als Lösungsmittel und Chlorsulfonsäure als Sulfonierungsmittel verwendet. Die Sulfonierung wird bei 150°C unter Überdruck von Stickstoff durchgeführt. Im dritten Verfahren wird PES in 1,2-Dichlorethan suspendiert. Die Suspension wird nach der Zugabe von Chlorsulfonsäure klar. Jedoch fällt das sulfonierte PES im Verlaufe der Reaktion aus. Daher läuft die Sulfonierung mit dem Verfahren heterogen ab.

Diese drei bekannten Verfahren weisen ebenfalls eine Reihe von Nachteilen auf. So lassen sich Nebenreaktionen und somit Nebenprodukte (chlorsulfonierte Produkte) bei der Verwendung von Chlorsulfonsäure nicht vermeiden. Des weiteren ist der Prozeß nur schwierig zu beherrschen, da aufgrund der hohen Reaktionstemperatur nur eine relativ kurze Reaktionszeit möglich ist. Ferner weist das sulfonierte PES niedrige Viskosität auf, welche auf den Abbau der Polymerketten zurückgeführt werden könnte.

Nach den Angaben in der EP-A-0,008,894 und in der Literatur (vergl. LÜ Hui-Juan; SHEN Lian-Chun; WANG Cai-Xia; JIANG Da-Zhen; CEMICAL JOURNAL of CHINESE UNIVERSITIES; No.5 Vol. 19; 05.1998; P833-835) findet in konzentrierten Schwefelsäure keine Sulfonierung von PES statt. In Chlorsulfonsäure dauert die Sulfonierung von PES über 20 h bei Raumtemperatur. Das so hergestellte Produkt ist wasserlöslich. Ebenfalls kann die Sulfonierung von PES in konzentrieter Schwefelsäure durch Verwendung von Oleum als Sulfonierungsmittel "über Nacht" durchgeführt werden und das sulfonierte PES ist wasserlöslich. Dies dürfte auf den zu hohen Sulfonierungsgrad und/oder den Polymerabbau zurückzuführen sein. Eine kontrollierbare Sulfonierung mit Chlorsulfonsäure oder Oleum ist nach diesem Stand der Technik unmöglich.

Die gleiche Aussage ist der EP-A-0,112,724 zu entnehmen. In diesem Stand der Technik werden neue Sulfonierungsverfahren beschrieben.

Nach dem beschriebenen Verfahren wird das PES in Dichlormethan suspendiert und bei einer Temperatur von 0 bis 5°C mit Sulfonierungsmitteln, z.B. mit SO₃ oder mit Chlorsulfonsäure über einen Zeitraum von 4 Stunden behandelt.

In der US-A-4,413,106 wird die gleiche Sulfonierung von PES unter Verwendung von Oleum durchgeführt. Jedoch wird die Sulfonierung heterogen durchgeführt, was eine strukturelle Inhomogenität des sulfonierten PES verursachen dürfte.

In der DE-A-38 14 760 wird die Sulfonierung von PES in reiner Schwefelsäure unter Verwendung von 65%-igem Oleum dargestellt. Das innerhalb einer kurzen Zeit (3 Stunden) und bei einer niedrigen Temperatur sulfonierte PES zeigt einen niedrigen Sulfonierungsgrad (22%) und eine reduzierte Viskosität. Bei 25°C und Durchführung der Reaktion innerhalb von 22 Stunden beträgt der Sulfonierungsgrad des PES 39%. Wenn die Temperatur bei 40°C liegt, wird das PES abgebaut. Mit dem vorbekannten Verfahren ist unterhalb von Temperatur von 5°C jedoch mit keinem befriedigenden Ergebnis mehr zu rechnen.

Aus einem Artikel von Lü Hui-Juan et al. in Chemical Journal of Chinese Universities; No.5 Vol. 19; 05.1998; P833-835 wird die Kinetik von Sulfonierungsreaktionen beschrieben. Daraus ergibt sich, daß die Sulfonierungsgeschwindigkeit in konzentrierter Schwefelsäure unter Verwendung der Chlorsulfonsäure innerhalb der ersten 10 Stunden sehr niedrig ist. Dagegen ist die Sulfonierungsgeschwindigkeit in Dichlormethan schon zu Beginn der Reaktion sehr hoch.

Es besteht weiterhin ein Bedarf nach ökonomisch durchführbaren Sulfonierungsverfahren von aromatischen Polymeren. Insbesondere stellt sich die Frage, ob die Sulfonierung innerhalb einer kurzen Zeit und bei einer niedrigen Temperatur durchgeführt werden kann, ohne die Polymerketten abzubauen. Weiterhin sollte die Sulfonierung kontrollierbar sein und der Sulfonierungsgrad sollte variabel sein.

In den WO-A-96/29,359 und WO-A-96/29,360 werden Polymerelektrolyte aus sulfonierten aromatischen Polyetherketonen und die Herstellung von Membranen aus diesen Materialien beschrieben.

In der EP-A-0 152 161 werden überwiegend aus der Wiederholungseinheit -O-Ar-CO-Ar- (Ar = zweiwertiger aromatischer Rest) bestehende Polyetherketone (nachfolgend "PEK" genannt) und daraus hergestellte geformte Gebilde beschrieben.

Sulfonierte, streng alternierende Polyetherketone mit der Wiederholungseinheit -O-Ar-CO-Ar- werden in J. Polym. Sci.: Vol. 23, 2205-2222, 1985 beschrieben. Der Aufbau der Polyetherketone geschieht hier durch elektrophilen, und nicht wie in EP-A-0 152 161 beschrieben, durch nucleophilen Angriff. Die Polymeren wurden durch Sulfurtrioxid unter Verwendung von Triethtylphosphat in Dichlorethan sulfoniert. Eine weitere, in dieser Literaturstelle verwendete Sulfonierungsmethode ist die Chlorsulfonierung mit Chlorsulfonsäure. Allerdings wird bei dieser Methode, abhängig vom Grad der Sulfonierung, auch ein Abbau des Molekulargewichtes beobachtet. Es schließt sich die Amidierung des Säurechlorides an.

Ausgehend von diesem Stand der Technik liegt der vorliegenden Erfindung somit die Aufgabe zugrunde, ein einfaches und preiswertes Sulfonierungsverfahren für aromatische Polymere zur Verfügung zu stellen, bei dem möglichst kein Abbau des Polymeren während der Sulfonierung erfolgt, das in homogener Phase durchführbar ist und das zu möglichst homogenen Produkten führt.

Die vorliegende Erfindung betrifft ein Verfahren zur Herstellung von sulfonierten aromatischen Polymeren umfassend die Maßnahmen:
a) Auflösen des aromatischen Polymeren in einer im wesentlichen wasserfreien Säure ausgewählt aus der Gruppe bestehend aus konzentrierter Schwefelsäure, Chlorsulfonsäure oder Oleum,
b) Zugabe eines unter Reaktionsbedingungen inerten organischen Lösungsmittels
c) Zugabe eines Anhydrids einer Carbonsäure
d) Zugabe eines Sulfonierungsmittels, und
e) Durchführung der Sulfonierung bei einer Temperatur unterhalb von 25 °C und für eine Zeit die ausreicht, um den gewünschten Sulfonierungsgrad zu erzielen.

Die Reihenfolge der Verfahrensschritte b) bis d) kann beliebig sein; diese Schritte können auch gleichzeitig vorgenommen werden.

Bei dem in Schritt a) eingesetzten aromatischen Polymeren kann es sich um jedes Polymere handeln, das im Polymerrückgrad (Polymerhauptkette) sulfonierbare aromatische Gruppen aufweist und daß sich in den in Schritt a) eingesetzten Lösungsmitteln lösen läßt. Beispiele dafür sind aromatische Polyamide, aromatische Polyimide, aromatische Polyetherketone (im weitesten Sinne; d.h. Polymere mit Ether- und Ketonbrücken im Polymerrückgrad), aromatische Polycarbonate, aromatische Polysulfone, -sulfoxide oder -sulfide, aromatische Polyethersulfone, aromatische Polyester. Besonders bevorzugt sind aromatische Polyetherketone, Polyetheretherketon, Polyetherethersulfon und insbesondere Polyethersulfone.

Die in Schritt a) eingesetzte im wesentlichen wasserfreie Säure weist einen Wassergehalt von weniger als 3 Gew.-%, vorzugsweise weniger als 2 Gew.-%, insbesondere weniger als 1,5 Gew.-%, auf. Die Säuren können einzeln oder in Kombination eingesetzt werden.

Die Konzentration des gelösten aromatischen Polymeren in der im wesentlichen wasserfreien Säure beträgt üblicherweise 0,01 bis 30 Gew. %, vorzugsweise 0,1 bis 25 Gew. %, insbesondere 1 bis 20 Gew. %, bezogen auf die Lösung.

Das in Schritt b) eingesetzte inerte organische Lösungsmittel kann ein Kohlenwasserstoff sein, der vorzugsweise halogeniert ist, besonders bevorzugt ein aliphatischer chlorierter und/oder fluorierter Kohlenwasserstoff. Dieser ist unter den Reaktionsbedingungen üblicherweise flüssig. Die Menge wird so gewählt, daß eine homogene Lösung entsteht.

Beispiele für Kohlenwasserstoffe sind bei 25 °C flüssige gesättigte aliphatische Kohlenwasserstoffe, insbesondere verzweigte und unverzweigte Kohlenwasserstoffe mit 5 bis 15 Kohlenstoffatomen, wie Pentan, Hexan, Heptan, Octan oder Decan oder ethylenisch ungesättigte aliphatische Kohlenwasserstoffe, insbesondere mit 5 bis 15 Kohlenstoffatomen, wie Hexen, Octen oder Decen.

Bespiele für halogenierte Kohlenwasserstoffe sind bei 25 °C flüssige chlorierte und/oder fluorierte gesättige aliphatische Kohlenwasserstoffe, wie Mono-, Di-, Tri- oder Tetrachlormethan, Mono-, Di-, Tri-, Tetra-, Penta- oder Hexachlorethan oder die unterschiedlichen Chlor-/Fluormethane bzw. -ethane. Besonders bevorzugt wird Dichlormethan.

Das in Schritt c) eingesetzte Anhydrid einer Carbonsäure kann beliebiger Natur sein. Neben linearen Anhydriden sind cyclische Verbindungen einsetzbar.

Beispiele dafür sind Anhydride von aliphatischen Monocarbonsäuren, wie Ameisen-, Essig-, Propion-, Butter- und Capronsäure, Anhydride von aliphatischen oder ethylenisch ungesättigten aliphatischen Dicarbonsäuren, wie Malonsäure, Bernsteinsäure oder Milchsäure, Anhydride von cycloaliphatischen Carbonsäuren, wie Cyclohexancarbonsäure, Anhydride von aromatischen Mono- oder Dicarbonsäuren, wie Benzoesäure, Phthal-, Iso- oder Terephthalsäure. Daneben können auch Anhydride aus unterschiedlichen Carbonsäuren zum Einsatz kommen. Des weiteren können auch Trifluoressigsäureanhydrid (CF₃CO)₂O oder Trichloressigsäureanhydrid (CCl₃CO)₂O eingesetzt werden.
Besonders bevorzugt wird Essigsäureanhydrid und Trifluoressigsäureanhydrid.

Bei dem in Schritt d) eingesetzten Sulfonierungsmittel kann es sich um ein beliebiges Sulfonierungsmittel handeln, solange dieses unter den Reaktionsbedingungen zu einer Sulfonierung des aromatischen Polymerrückgrades in der Lage ist. Beispiele dafür sind Oleum, konzentrierte Schwefelsäure, Chlorsulfonsäure.

Bevorzugt werden Chlorsulfonsäure oder Oleum, insbesondere 20 %iges Oleum.

Die Sulfonierungsreaktion wird vorzugsweise bei Temperaturen unterhalb 10°C, insbesondere bei Temperaturen unterhalb 5°C, besonders bevorzugt zwischen 0°C und 5°C durchgeführt. Die Untergrenze kann auch unterhalb 0°C liegen sofern die Mischung noch flüssig ist und gerührt werden kann.

Die Sulfonierungsreaktion wird im Zeitintervall von weniger als 15 Stunden durchgeführt. Bevorzugt beträgt die Sulfonierungsdauer weniger als 10 Stunden und ganz besonders bevorzugt weniger als 6 Stunden.

Das erfindungsgemäße Verfahren ist durch eine niedrige Reaktionstemperatur sowie durch eine kurze Reaktionszeit gekennzeichnet. Die mittels dieses Verfahrens hergestellten sulfonierten aromatischen Polymeren, insbesondere die Polyethersulfone, zeichnen sich durch variabel einstellbare und besonders hohe Sulfonierungsgrade aus, ohne daß die Polymerketten nennenswert abgebaut worden sind.

Die Verfahrensprodukte eignen sich aufgrund der Homogenität der Sulfonierung insbesondere zur Herstellung von Membranen für Anwendungen, bei denen es auf eine hohe Gleichmäßigkeit der Eigenschaften ankommt. Beispiele dafür sind elektrochemische Anwendungen, wie die Elektrodialyse oder der Einsatz in Brennstoffzellen, oder der Einsatz als Dielektrika, beispielsweise in Kondensatoren mit hohen Kapazitäten.

Diese Erfindung betrifft ferner die Verwendung der nach dem erfindungsgemäßen Verfahren erhältlichen sulfonierten aromatischen Polymeren, insbesondere der sulfonierten aromatischen Polyethersulfone, zur Herstellung von homogenen Membranen und Blendmembranen.

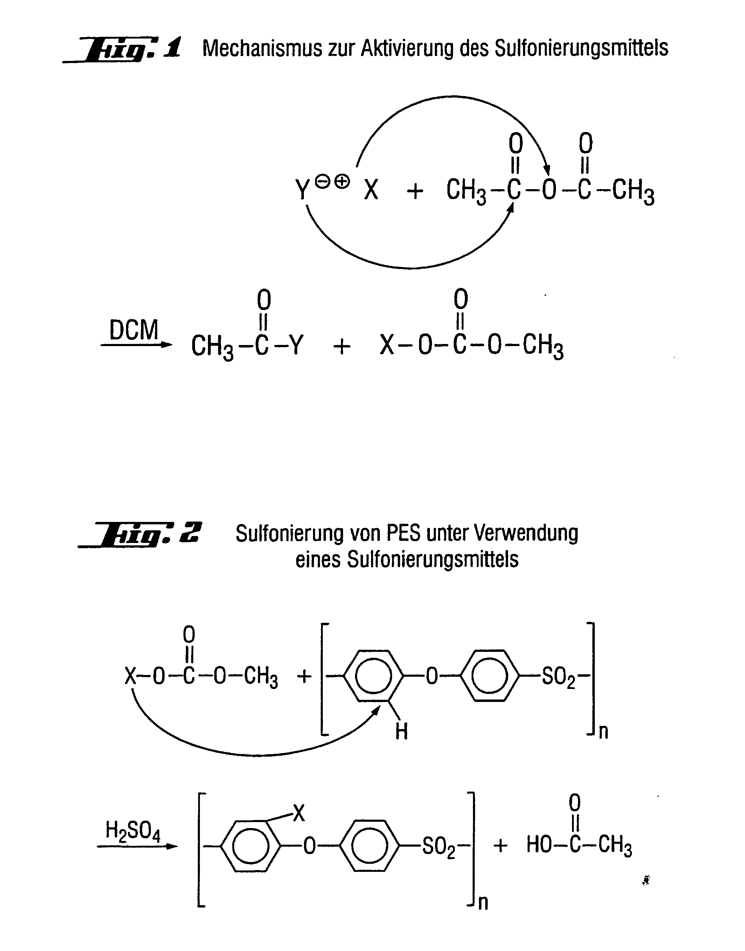

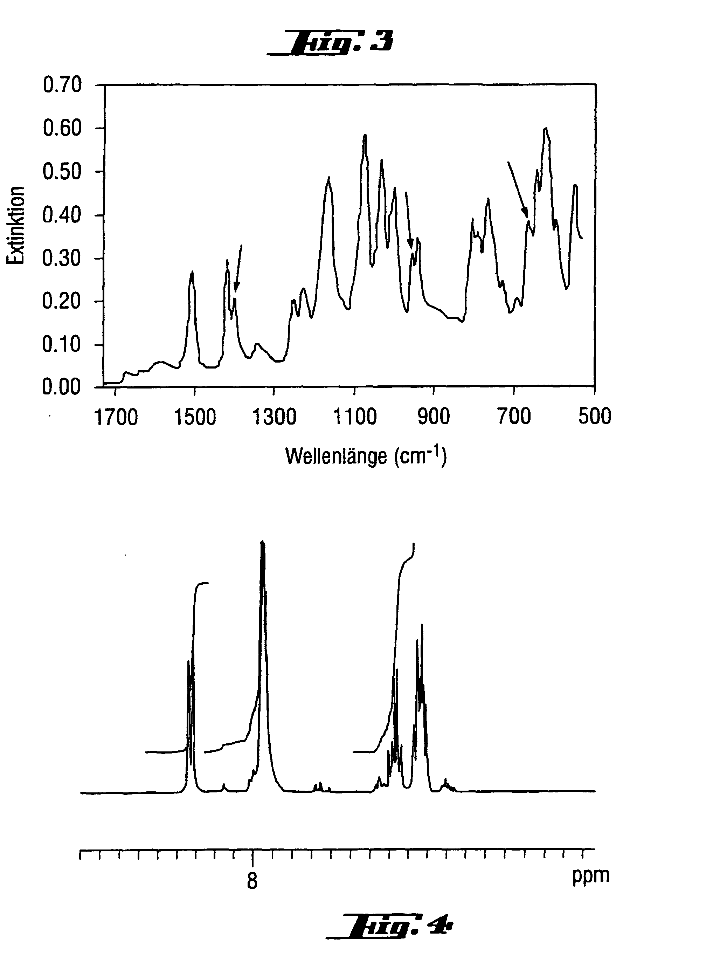

In den Figuren 1 und 2 wird das erfindungsgemäße Verfahren zur Sulfonierung am Beispiel von PES schematisch dargestellt.

Ohne an mechanistische Darstellungen gebunden zu sein wird angenommen, daß das Sulfonierungsmittel durch das Anhydrid aktiviert wird.

Das aktivierte Sulfonierungsmittel reagiert sodann mit dem aromatischen Polymeren durch elektrophile Substitution nach folgendem Schema (siehe Figur 2).

Gemäß dem in Figur 2 dargestellten Verfahrensablauf wird in erster Linie durch Zutropfen von Sulfonierungsmittel, wie Chlorsulfonsäure oder Oleum in 95~97%iger Schwefelsäure, eine wasserfreie Säure hergestellt. Dann löst sich PES bei 0°C in der wasserfreien Säure. Anschließend wird inertes organisches Lösungsmittel, wie Dichlormethan ("DCM") zugemischt. Danach wird die Zugabe des Sulfonierungsmittels, wie Chlorsulfonsäure und/oder Oleum vorgenommen. Zum Schluß wird Essigsäureanhydrid als Aktivierungsmittel zugegeben. Die Sulfonierung kann bei einer Temperatur von 0 bis 10 °C ablaufen und kann durch Eingießen des Reaktionsgemisches in Wasser beendet werden.

Bei einer anderen Variante des erfindungsgemäßen Verfahrens wird wiederum in erster Linie durch Zutropfen von Sulfonierungsmittel, wie Chlorsulfonsäure oder Oleum in 95~97%iger Schwefelsäure, eine wasserfreie Säure hergestellt. Dann wird PES bei 0°C in der wasserfreien Säure gelöst. Anschließend wird die Zugabe des Sulfonierungsmittels Chlorsulfonsäure oder Oleum ausgeführt. Danach wird Aktivierungsmittel Essigsäureanhydrid in Dichlormethan zugegeben. Die Sulfonierung kann bei der Temperatur von 0 bis 10 °C ablaufen und kann durch Eingießen des Reaktionsgemisches in Wasser beendet werden.

Bei der Herstellung der wasserfreien Säure ist die eingesetzte Menge von Chlorsulfonsäure oder Oleum auf den Wassergehalt in der Schwefelsäure bezogen. Die eingesetzte Menge des Sulfonierungsmittels sowie des Aktivierungsmittels ("Quasi-Katalysator") ist auf den Zielsulfonierungsgrad bezogen. Dementsprechend sollte die Reaktionszeit auf einen Zeitraum von bis zu 6 Stunden beschränkt werden.

Die mit dem erfindungsgemäßen Verfahren sulfonierten aromatischen Polyethersulfone wurden mit Hilfe von FTIR, NMR, Titration, GPC und Elementaranalyse sowie DSC untersucht. Daraus wurde überraschenderweise gefunden, daß mit den Verfahren eine steuerbare Sulfonierung von PES bei niedrigerer Temperatur und innerhalb einer kurzen Reaktionszeit möglich ist.

Des weiteren wurden Membranen aus sulfoniertem PES oder Blendmembranen aus sulfoniertem PES und unmodifiziertes PES; sulfoniertem PES und aminiertes PES sowie sulfoniertem PES und Polybenzimidazol PBI hergestellt.
Zur Herstellung der Membran wurde N,N-Dimethylacetamid (DMAC) oder N-MethylPyrrolidon (NMP) als Lösungsmittel verwendet, und eine Polymerlösung wurde durch die Lösung von sulfoniertem PES sowie von anderen Blendkomponenten in Lösungsmittel hergestellt. Ein Film wurde aus der Polymerlösung auf eine Trägerschicht ausgerakelt und das Lösungsmittel wurde zur Herstellung der Membran verdampft. Die folgenden Ausführungsbeispiele erläutern die Erfindung ohne diese zu begrenzen.

### Beispiel 1

100ml 95 bis 97%iger Schwefelsäure wurden vorgelegt und mit 35 ml von Chlorsulfonsäure bei 0 ° C versetzt. Dann wurden darin 20g von PES (Type E6020; BASF AG) bei 0 ° C aufgelöst. Danach wurden 50 ml von Dichlormethan zugemischt. Die Lösung wurde unter Rühren auf 0 ° C gekühlt. Innerhalb von 30 Minuten wurden 4ml von Chlorsulfonsäure in die Polymerlösung tropfenweise zugegeben. Dann wurden 8ml von Essigsäureanhydrid zugegeben. Danach lief die Sulfonierung 3,3 Stunden bei 5 bis 10 ° C ab.

In Tabelle 1 sind die Daten von unmodifiziertem PES und sulfoniertem PES aus GPC-Untersuchung aufgeführt.

**Tab. 1**

| Daten der GPC-Untersuchung | | |
|---|---|---|
| | Sulfoniertes PES | Unmodifiziertes PES |
| Mn | 1,512E+4 g/mol | 4,554E+3 g/mol |
| Mw | 4,033E+4 g/mol | 4,152E+4 g/mol |
| Mz | 6,992E+4 g/mol | 7,286E+4 g/mol |
| Mv | 3,675E+4 g/mol | 3,744E+4 g/mol |
| D* | 2,668E+0 | 9,117E+0 |

| | | |
|---|---|---|
| Meßbedinung: DMSO; 4,3g/l; PS-Säure; 60°C;1,0ml/min; D*=Breiteindex | | |

Aus Tabelle 1 ist abzusehen, daß der Mittelwert der Molmasse von sulfoniertem PES höher als der des unmodifizierten PES ist, was auf die Sulfongruppen in Basispolymer zurückgeführt werden kann. Mw, Mz und Mv von sulfoniertem PES und unmodifiziertem PES sind vergleichbar.

In Tabelle 2 sind die berechneten und gemessenen Werte der Elementaranalyse von sulfoniertem PES aufgeführt.

**Tab. 2**

| Ergebnisse von Elementaranalyse und Titration | | | |
|---|---|---|---|
| Element | Berechnet1*(%) | Berechnet2**(%) | Gefunden*** |
| C% | 55,8 | 54,5 | 52,5 |
| H% | 2,8 | 2,8 | 2,5 |
| O% | 24,8 | 25,6 | 27,7 |
| S% | 16,5 | 17,1 | 16,5 |
| Cl% | | | <0,04 |

| | | | |
|---|---|---|---|
| *Die Werte werden aus dem Schwefel-Gehalt, das mit Hilfe der Elementaranalyse bestimmt wird, berechnet. | | | |
| **Die Werte werden aus dem Schwefel-Gehalt, das mit Hilfe der Titration bestimmt wird, berechnet. | | | |
| ***Die Werte werden mit Hilfe der Elementaranalyse ermittelt. | | | |

Aus den Ergebnissen von GPC und Elementaranalyse ergibt sich, daß kein Abbau der Polymerketten während der Sulfonierung mit vorstehenden Verfahren stattfindet.

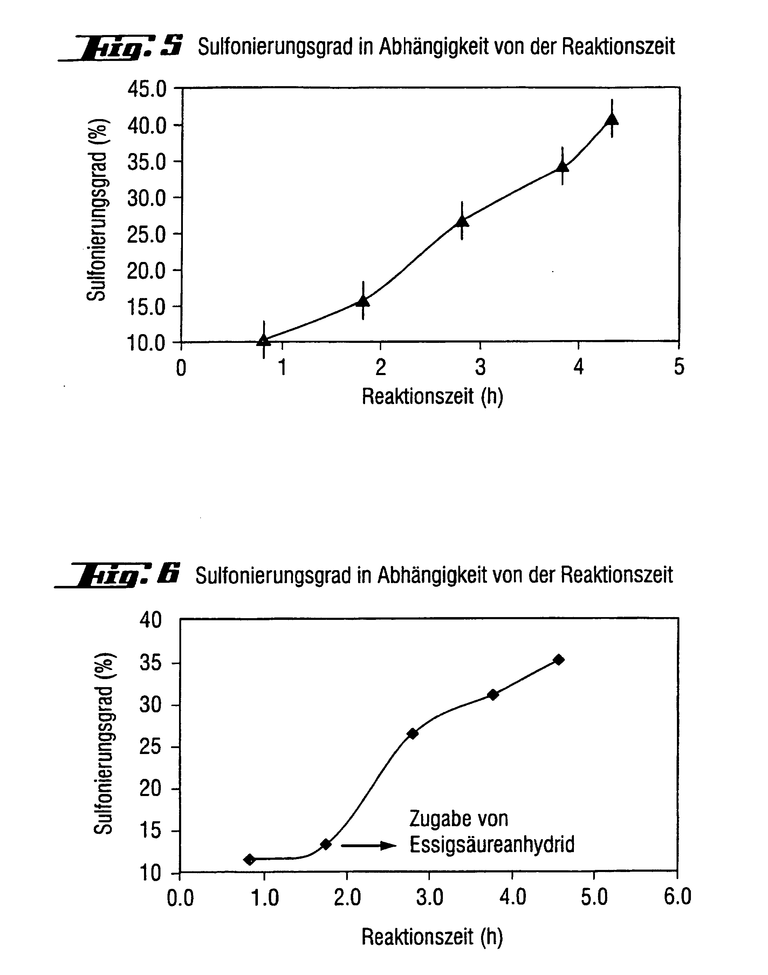

In Figur 3 ist das FTIR-Spektrum von sulfoniertem PES aufgeführt.

Wie in der Literatur [Lü Hui-Juan et al. in Chemical Journal of Chinese Universitites, No.5 Vol.19, 05/1998, P833-835; In-Cheol Kim et al. in Membrane Joumal; Vol.8. No.4, 12/1998, P210-219; R.Nolte et al. in Journal of Membrane Science (1993) 211-220] beschrieben wird, werden die neuen Absorptionsbanden bei 1028 cm⁻¹, 737 cm⁻¹ und 1465 cm⁻¹ aufgrund der SO₃H -Gruppen an den aromatischen Ringen zu Ortho-Ether-Brücken hervorgerufen.

In Figur 4 ist das ¹H-NMR-Spektrum von sulfoniertem PES gezeigt.

Wie in der oben zitierten Literatur beschrieben wird, tritt die chemische Verschiebung wegen der Sulfonierung von PES bei 8,31 ppm auf.

Durch potentiometrische Titration wurde der Sulfonierungsgrad oder die lonenaustauscherkapazität ("IEC") in Abhängigkeit von der Reaktionszeit bestimmt.

Aus Figur 5 ergibt sich, daß der Sulfonierungsgrad des sulfonierten PES abhängig von der Reaktionszeit ist und innerhalb 5 Stunden ein Sulfonierungsgrad von 41,2 % (IEC=1,55 meq/g) erreicht wird.

Im Vergleich zu dem aus der DE-A-38 14 760 bekannten Verfahren (siehe Beispiele 1-3) wird die Reaktionszeit erheblich abgekürzt, die Reaktionstemperatur ist niedriger und dementsprechend wird der Sulfonierungsgrad des sulfonierten PES erhöht.

### Beispiel 2

100ml 95 - 97%iger Schwefelsäure wurden bei Raumtemperatur vorgelegt und mit 110 ml von 20%igem Oleum versetzt. Dann wurde die Temperatur der Lösung auf 0°C gesenkt. Danach lösten sich 40g von PES (Type E7020; BASF AG) bei 0 °C darin. Dann wurden 100ml von Dichlormethan zugemischt. 20ml von 20%igem Oleum wurden in die Polymerlösung innerhalb 30min tropfenweise zugegeben. Zum Schluß gab man 8ml von Essigsäureanhydrid zu. Des weiteren lief die Sulfonierung 2 Stunden bei 0 bis 10 °C ab. Insgesamt lief der Prozeß etwa 5 Stunden von der Lösung des PES bis zum Ende der Sulfonierung.

Aus Figur 6 ergibt sich, daß die Sulfonierung erst nach der Zugabe von Essigsäureanhydrid beschleunigt wurde.

Analoge Charakterisierungsergebnisse aus FTIR und NMR wurden wie in Beispiel 1 erhalten. Der durch Titration bestimmte Sulfonierungsgrad des Produktes lag bei 34,3% (IEC=1,32). Im Vergleich zu dem aus der DE-A-38 14 760 vorbekannten Verfahren (siehe Beispiele 3) wurde der vergleichbare Sulfonierungsgrad unter ähnlicher Reaktionszeit und niedrigerer Reaktionstemperatur (25 °C gemäß DE-A) erreicht. Unter der ähnlichen Reaktionszeit und Temperatur ist der Sulfonierungsgrad erheblich höher als der gemäß DE-A-38 14 760 (vergl. Beispiele 1 und 2).

### Beispiel 3

200ml 95 - 97%iger Schwefelsäure wurden bei 10°C vorgelegt und mit 220 ml von 20%igem Oleum versetzt. Danach lösten sich 80g von PES (Type E7020; BASF AG) bei 10 °C darin. 16 ml von Chlorsulfonsäure wurden in die Polymerlösung innerhalb 30min tropfenweise zugegeben. Zum Schluß gab man 18ml von Essigsäureanhydrid in 100ml Dichlormethan zu. Des weiteren lief die Sulfonierung 4 Stunden bei 10 °C ab.

Aus dem Titrationsergebnis ergab sich, daß das Produkt den Sulfonierungsgrad von 96% aufwies (IEC=3,1meq/g). Das Produkt war wasserlöslich.

### Beispiel 4

200ml 95 - 97%iger Schwefelsäure wurden bei 10°C vorgelegt und mit 129 ml von 20%igem Oleum versetzt. Danach lösten sich 70g von PES (Type E7020; BASF AG) bei 10 °C darin. 14 ml von Chlorsulfonsäure wurden in die Polymerlösung innerhalb 30min tropfenweise zugegeben. Zum Schluß gab man 15ml von Essigsäureanhydrid in 100 ml Dichlormethan zu. Des weiteren lief die Sulfonierung 2 Stunden bei 10 °C ab.

Aus dem Titrationsergebnis ergab sich, daß das Produkt den Sulfonierungsgrad von 13% aufwies (IEC=0,54 meq/g).

### Beispiel 5 (Membranherstellung)

Die hergestellten Membranen sind in Tabelle 3 und Tabelle 4 zusammengestellt.

**Tab. 3**

| Membranherstellung | |
|---|---|
| Lösungsmittel | NMP |
| Polymerkomponenten | Sulfoniertes PES oder |
| | Sulfoniertes PES/PES |
| Polymerkonzentration | 20~25% |
| Temperatur zum Abdampfen | 90~120 °C |
| Verweilzeit im Ofen | 20h |
| Nachbehandlung der Membranen | 1 N H2SO4, bei 40 °C |
| | VE-Wasser bei 40 °C |

**Tab. 4**

| Daten der Hergestellten Membranen | | | | | | |
|---|---|---|---|---|---|---|
| Membran-Nr. | Materialien | IEC (meq/g) | Que (Gew.%)* | Lf (mS/cm)* | Emodul (N/mm²)* | Bruchdehnung (%)* |
| TE-46 | Sulfoniertes PES | 1,35 | 34 | 106,4 | 138,3 | 150,5 |
| TE-47 | Sulfoniertes PES Und 10%PES | 1,3 | 44,6 | 154,4 | 183,9 | 111,9 |

Die Messung wurde in VE-Wasser bei 80 °C durchgeführt.

Es bedeuten: Que: Quellung der Membran. Lf: Leitfähigkeit der Membran.

## Patentansprüche

1. Verfahren zur Herstellung von sulfonierten aromatischen Polymeren umfassend die Maßnahmen:
a) Auflösen des aromatischen Polymeren in einer Säure mit einem Wassergehalt von weniger als 3 Gew.% ausgewählt aus der Gruppe bestehend aus konzentrierter Schwefelsäure, Chlorsulfonsäure oder Oleum,
b) Zugabe eines unter Reaktionsbedingungen inerten organischen Lösungsmittels
c) Zugabe eines Anhydrids einer Carbonsäure
d) Zugabe eines Sulfonierungsmittels, und
e) Durchführung der Sulfonierung bei einer Temperatur unterhalb von 25 °C und für ein Zeitintervall von weniger als 15 Stunden, um den gewünschten Sulfonierungsgrad zu erzielen.

2. Verfahren nach Anspruch 1, **dadurch gekennzeichnet, daß** das unter Reaktionsbedingungen inerte organische Lösungsmittel ausgewählt wird aus der Gruppe bestehend aus bei 25 °C flüssigen aliphatischen Kohlenwasserstoffen, insbesondere verzweigte und unverzweigte Kohlenwasserstoffe mit 5 bis 15 Kohlenstoffatomen und bei 25 °C flüssigen chlorierten und/oder fluorierten aliphatischen Kohlenwasserstoffen, inbesondere Dichlormethan ist.

3. Verfahren nach Anspruch 1, **dadurch gekennzeichnet, daß** das Anhydrid einer Carbonsäure ausgewählt wird aus der Gruppe bestehend aus Anhydride von aliphatischen Monocarbonsäuren, Anhydride von aliphatischen oder ethylenisch ungesättigten aliphatischen Dicarbonsäuren, Anhydriden von cycloaliphatischen Carbonsäuren, und Anhydriden von aromatischen Mono- oder Dicarbonsäuren, insbesondere Essigsäureanhydrid und Trifluoressigsäureanhydrid ist.

4. Verfahren nach Anspruch 1, **dadurch gekennzeichnet, daß** das Sulfonierungsmittel ausgewählt wird aus der Gruppe bestehend aus Oleum und Chlorsulfonsäure.

5. Verfahren nach Anspruch 1, **dadurch gekennzeichnet, daß** die Temperatur während der gesamten Reaktionszeit, insbesondere jedoch bei der Sulfonierung, unterhalb von 10 °C, insbesondere unterhalb von 5°C, eingestellt wird.

6. Verfahren nach Anspruch 1, **dadurch gekennzeichnet, daß** die Reaktionsdauer weniger als 6 Stunden beträgt.

7. Verfahren nach Anspruch 1, **dadurch gekennzeichnet, daß** das aromatische Polymere in wasserfreier Säure gelöst wird und diese Polymerlösung eine Konzentration im Bereich von 0,01 bis 30 Gew.%, bezogen auf die Lösung, beträgt.

8. Verfahren nach Anspruch 1, **dadurch gekennzeichnet, daß** Dichlormethan als Lösungsmittel und Essigsäureanhydrid oder Trifluoressigsäureanhydrid als Anhydrid verwendet werden.

9. Verfahren nach Anspruch 1, **dadurch gekennzeichnet, daß** zum Ende der Sulfonierung das sulfonierte aromatische Polymer in Eiswasser mit einer Temperatur unterhalb von 5°C eingerührt wird.

10. Verfahren nach Anspruch 1, **dadurch gekennzeichnet, daß** als Sulfonierungsmittel 20%iges Oleum und/oder Chlorsulfonsäure mit einer Reinheit oberhalb von 97 % verwendet werden.

11. Verfahren nach Anspruch 1, **dadurch gekennzeichnet, daß** als aromatisches Polymer Polyethersulfone, wie PES und PEES, und Polyketone, wie PEK, PEEK, PEEK, PEKEK und PEKK, PEEKK eingesetzt werden.

## Claims

1. A process for preparing sulfonated aromatic polymers, encompassing:
a) dissolving the aromatic polymer in an acid having a water content of less than 3% by weight selected from the group consisting of concentrated sulfuric acid, chlorosulfonic acid, and oleum,
b) adding an organic solvent which is inert under the conditions of the reaction,
c) adding a carboxylic anhydride,
d) adding a sulfonating agent, and
e) carrying out the sulfonation at a temperature below 25°C and for time period of less than 15 hours to achieve the desired degree of sulfonation.

2. The process as claimed in claim 1, wherein the organic solvent inert under the conditions of the reaction is selected from the group consisting of aliphatic hydrocarbons liquid at 25°C, in particular branched or unbranched hydrocarbons having from 5 to 15 carbon atoms, and chlorinated and/or fluorinated aliphatic hydrocarbons liquid at 25°C, in particular dichloromethane.

3. The process as claimed in claim 1, wherein the carboxylic anhydride is selected from the group consisting of anhydrides of aliphatic monocarbokylic acids, anhydrides of aliphatic or ethylenically unsaturated aliphatic dicarboxylic acids, anhydrides of cycloaliphatic carboxylic acids, and anhydrides of aromatic mono- or dicarboxylic acids, in particular acetic anhydride and trifluoroacetic anhydride.

4. The process as claimed in claim 1, wherein the sulfonating agent is selected from the group consisting of oleum and chlorosulfonic acid.

5. The process as claimed in claim 1, wherein the temperature during the entire reaction time, and in particular during the sulfonation, is set to be below 10°C, in particular below 5°C.

6. The process as claimed in claim 1, wherein the reaction takes less than 6 hours.

7. The process as claimed in claim 1, wherein the aromatic polymer is dissolved in anhydrous acid and the concentration of this polymer solution is in the range from 0.01 to 30% by weight, based an the solution.

8. The process as claimed in claim 1, wherein dichloromethane is used as solvent and acetic anhydride or trifluoroacetic anhydride as anhydride.

9. The process as claimed in claim 1, wherein at the end of the sulfonation the sulfonated aromatic polymer is stirred into iced water at a temperature below 5°C.

10. The process as claimed in claim 1, wherein 20% strength oleum and/or chiorosulfonic acid with purity above 97% are used as sulfonating agent.

11. The process as claimed in claim 1, wherein polyether sulfones, such as PES or PEES, or polyketones, such as PEK, PEEK, PEKEK, PEKK, or PEEKK, are used as aromatic polymer.

## Revendications

1. Procédé de production de polymères aromatiques sulfonés comprenant les opérations consistant à :
a) dissoudre le polymère aromatique dans un acide avec une teneur en eau inférieure à 3 % en poids choisi dans le groupe constitué de l'acide sulfurique concentré, l'acide chlorosulfonique ou l'oléum,
b) ajouter un solvant organique inerte dans les conditions de réaction,
c) ajouter un anhydride d'acide carboxylique,
d) ajouter un agent de sulfonation, et
e) effectuer la sulfonation à une température inférieure à 25 °C et pendant un intervalle de temps de moins de 15 heures, pour atteindre le degré de sulfonation souhaité.

2. Procédé selon la revendication 1, **caractérisé en ce que**, dans les conditions de réaction, le solvant organique inerte est choisi dans le groupe constitué des hydrocarbures aliphatiques liquides à 25 °C, en particulier les hydrocarbures ramifiés et non ramifiés avec 5 à 15 atomes de carbone et les hydrocarbures aliphatiques chlorés et/ou fluorés liquides à 25 °C, et en particulier est le dichlorométhane.

3. Procédé selon la revendication 1, **caractérisé en ce que** l'anhydride d'acide carboxylique est choisi dans le groupe constitué des anhydrides d'acides monocarboxyliques aliphatiques, des anhydrides d'acides dicarboxyliques aliphatiques ou aliphatiques éthyléniquement insaturés, des anhydrides d'acide carboxyliques cycloaliphatiques et des anhydrides d'acides mono- ou dicarboxyliques aromatiques, en particulier l'anhydride d'acide acétique et l'anhydride d'acide trifluoroacétique.

4. Procédé selon la revendication 1, **caractérisé en ce que** l'agent de sulfonation est choisi dans le groupe constitué de l'oléum et de l'acide chlorosulfonique.

5. Procédé selon la revendication 1, **caractérisé en ce que** la température pendant l'ensemble du temps de réaction, en particulier cependant pendant la sulfonation, est ajustée au-dessous de 10 °C, en particulier au-dessous de 5 °C.

6. Procédé selon la revendication 1, **caractérisé en ce que** la durée de la réaction est inférieure à 6 heures.

7. Procédé selon la revendication 1, **caractérisé en ce que** l'on dissout le polymère aromatique dans un acide anhydre et cette solution de polymère a une concentration dans la gamme de 0,01 à 30 % en poids, par rapport à la solution.

8. Procédé selon la revendication 1, **caractérisé en ce que** l'on utilise le dichlorométhane comme solvant et l'anhydride d'acide acétique ou l'anhydride d'acide trifluoroacétique comme anhydride.

9. Procédé selon la revendication 1, **caractérisé en ce qu'**à la fin de la sulfonation on introduit sous agitation le polymère aromatique sulfoné dans l'eau glacée à une température inférieure à 5 °C.

10. Procédé selon la revendication 1, **caractérisé en ce que** l'on utilise comme agent de sulfonation de l'oléum à 20 % et/ou de l'acide chlorosulfonique avec une pureté supérieure à 97 %.

11. Procédé selon la revendication 1, **caractérisé en ce que** l'on utilise comme polymère aromatique des polyéthersulfones, comme PES ou PEES, et des polycétones, comme PEK, PEEK, PEEK, PEKEK et PEKK, PEEKK.
